# EUROPEAN PATENT APPLICATION

(11) **EP 2 365 558 A1**
(43) Date of publication of application: **14.09.2011**
(21) Application number: 11250026.9
(22) Date of filing: 12.01.2011
(51) Int. Cl.: H01M 2/04, H01M 10/04, H01M 10/50, B21H 3/00, B23P 15/48, C23F 3/06, H01M 10/052, H01M 10/30

(54) **Battery pack and method of manufacturing same**

(30) Priority: 03.03.2010 US 310193 P; 21.12.2010 US 975237
(71) Applicant: Samsung SDI Co., Ltd., Yongin-si, Gyeonggi-do (KR)
(72) Inventor: Kim, Jong-Pil, Yongin-si Gyeonggi-do (KR); Baek, Woon-Seong, Yongin-si Gyeonggi-do (KR); Kim, Dae-Geun, Yongin-si Gyeonggi-do (KR)
(74) Representative: Mounteney, Simon James

(57) **Abstract**

A battery assembly comprising: a bare cell; a protection circuit substrate, upon which protection circuit components are mounted; at least one connection tab, connecting the protection circuit substrate to the bare cell; and a case, in which the protection circuit substrate is housed; wherein the connection tab is connected to the bare cell via a screw and the screw has been polished.

## Description

The present invention relates to a battery pack and a method of manufacturing the same.

Portable electrical and electronic devices typically include battery packs that enable them to be operated in places where additional power sources are not available. Such, battery packs frequently employ economical secondary batteries that are capable of charging and discharging. Representative secondary batteries include a nickel (Ni)-cadmium (Cd) battery, a Ni-MH battery, a lithium (Li) battery and a Li-ion secondary battery.

A secondary battery is typically formed of a bare cell formed by sealing a can accommodating an electrode assembly and an electrolyte, and a protection circuit substrate electrically connected to the bare cell. The bare cell charges/discharges electricity via a chemical reaction. The protection circuit substrate controls charging/discharging of the bare cell and prevents overcharging/overdischarging of the bare cell to protect the bare cell. When the bare cell and the protection circuit are connected to form the secondary battery, if the electrical resistance between the bare cell and the protection circuit module is great, the charging/discharging efficiency of the bare cell is compromised.

If there is an external impact to the secondary battery the contact resistance can increase in a region where the bare cell and the protection circuit substrate are connected, due to the impact disrupting the contact between the two. This will in turn have a negative impact upon the charging/discharging efficiency of the bare cell. In view of this, the secondary battery may go through a reliability test for determining whether the secondary battery is stable enough to withstand an impact caused when mounting the secondary battery in an electronic product.

The present invention seeks out to provide a battery assembly that offers greater resistance to impact, thereby avoiding a reduction in charging/discharging efficiency.

Accordingly, a first aspect of the invention provides a battery assembly as set out in Claim 1.

An embodiment of the present invention therefore enables the coupling between a bare cell and a case to be enhanced, and thus the likelihood of an increase in electrical resistance between the bare cell and a protection circuit substrate due to an external impact can be reduced.

Preferred features of this aspect of the invention are set out in claims 2 to 8.

A further aspect of the invention provides a method of manufacturing a screw for connecting a connection tab to a bare cell in a battery assembly as set out in Claim 9. Preferred features of this aspect of the invention are set out in Claims 10 to 15.

Embodiments of the invention will be described below by way of example and with reference to the accompanying drawings, in which:-
FIG. 1A is an exploded perspective view illustrating a battery pack, according to an embodiment of the present invention;
FIG. 1B is a perspective view illustrating a coupled state of the battery pack of FIG. 1A;
FIG. 1C is a cross-sectional view taken along a line Ic-Ic' of FIG. 1B;
FIG. 2 is a schematic exploded perspective view illustrating sizes of portions of a battery pack, according to an embodiment of the present invention;
FIG. 3A is an enlarged cross-sectional view of a part llla of FIG. 1C;
FIG. 3B is a cross-sectional view illustrating a state where a random free fall (RFF) test has been performed on the embodiment of FIG. 3A;
FIG. 4 is a schematic cross-sectional view illustrating a screw, according to an embodiment of the present invention;
FIG. 5 is a flowchart of a method of manufacturing a screw, according to an embodiment of the present invention; and
FIG. 6 is a flowchart of a chemical polishing process.

Reference will now be made in detail to embodiments of the invention, examples of which are illustrated in the accompanying drawings.

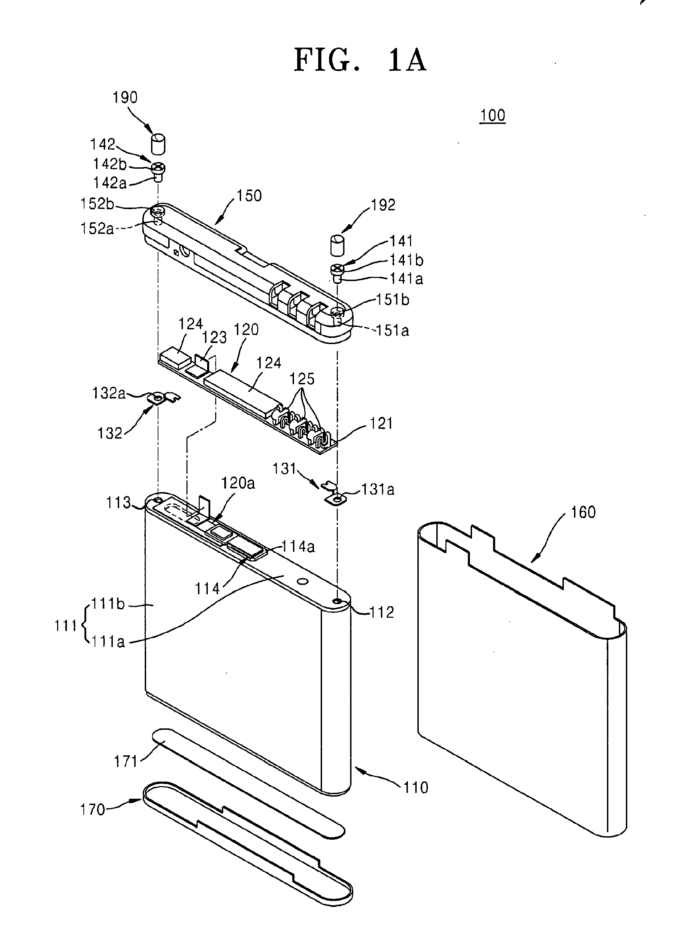

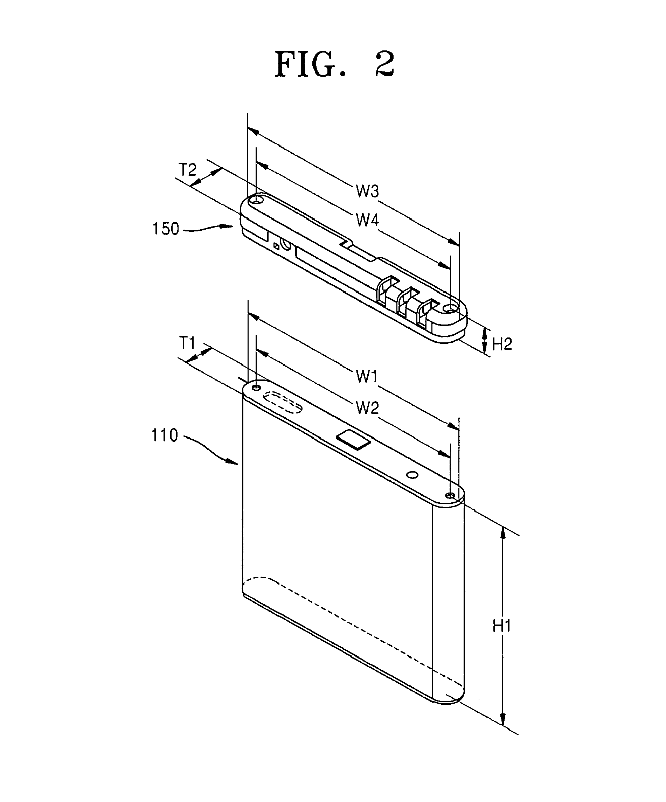

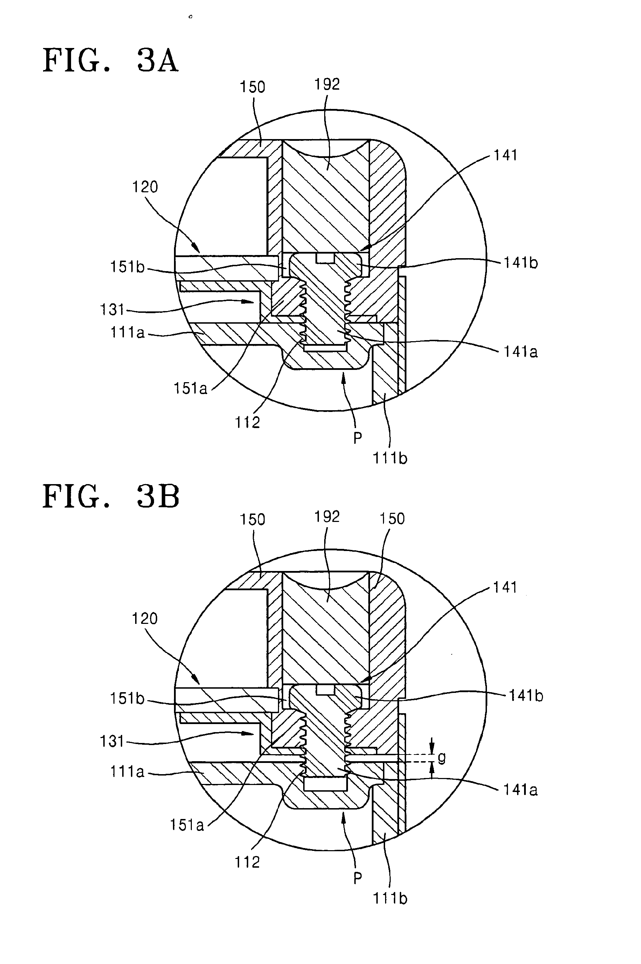

According to a first embodiment of the present invention, a battery pack 100 includes screws 141 and 142 for coupling a bare cell 110 and a case 150. Hereinafter, the battery pack 100 will be described with reference to FIGS. 1A through 1C and 2, and the screws 141 and 142 and a method of manufacturing the same will be described with reference to FIGS. 3 through 6.

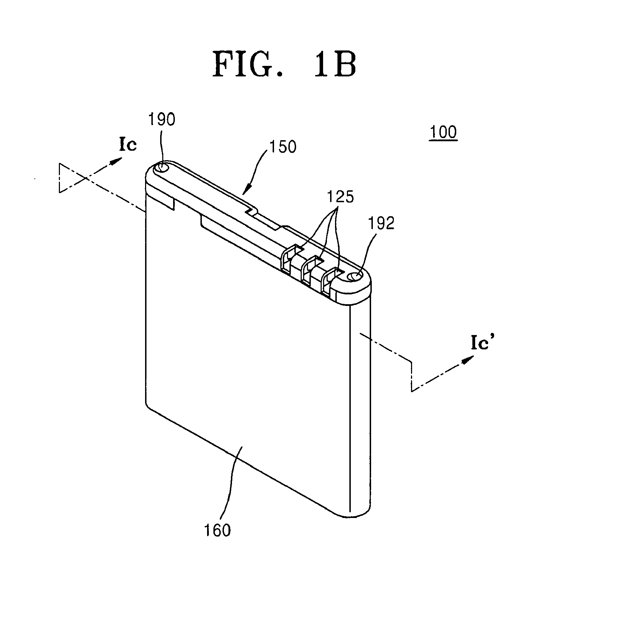

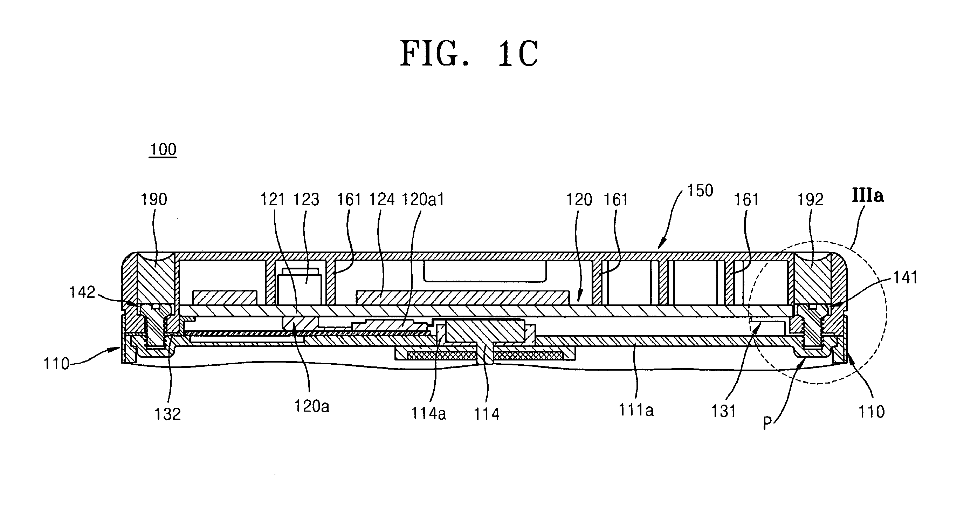

FIG. 1A is an exploded perspective view illustrating a battery pack, according to an embodiment of the present invention. FIG. 1B is a perspective view illustrating a coupled state of the battery pack of FIG. 1A. FIG. 1C is a cross-sectional view taken along a line Ic-Ic' of the battery pack of FIG. 1B. As illustrated in FIGS. 1A through 1D, the battery pack 100 includes a bare cell 110, a protection circuit substrate 120, a cover case 150, and screws 141 and 142.

The bare cell 110 includes an electrode assembly (not shown) and a sealing assembly 111 accommodating the electrode assembly. The electrode assembly may be formed by winding a positive electrode plate (not shown), a negative electrode plate (not shown), and a separator (not shown). The sealing assembly 111 includes a cap plate 111 a and a metal type can 111 b and may be formed of a conductive material, for example, aluminum. The metal type can 111 b has an open end, and the cap plate 111 a covers the open end of the metal type can 111 b. An electrode terminal 114 that is insulated by an insulator 114a is formed in the cap plate 111 a.

The positive electrode plate of the bare cell 110 is electrically connected to the sealing assembly 111, and the negative electrode plate of the bare cell 110 is electrically connected to the electrode terminal 114. The electrode terminal 114, which is connected to the negative electrode plate of the bare cell 110, and the sealing assembly 111, which is connected to the positive electrode plate of the bare cell 110, consequently have different polarities. In the current embodiment, the electrode terminal 114 is electrically connected to the negative electrode plate of the electrode assembly of the bare cell 110 to be a negative electrode P-, and the sealing assembly 111 is electrically connected to the positive electrode plate of the electrode assembly of the bare cell 110 to be a positive electrode P+, but the present invention is not limited thereto. In other words, the bare cell 110 may be a rectangular battery in which the electrode assembly is sealed by the sealing assembly 111 formed of a metal material, and in which any one of the positive electrode plate and the negative electrode plate of the electrode assembly is electrically connected to the sealing assembly 111, and the other plate is connected to the electrode terminal 114. Here, the bare cell 110 is a secondary battery. In practice, this means that the bare cell 110 can be an ion battery or a lithium polymer battery. However, the present invention is not limited thereto. Thus, the bare cell 110 may be a secondary battery such as a nickel (Ni)-cadmium (Cd) battery, a Ni-metal hydride (MH) battery, or the like.

One surface of the cap plate 111a of the bare cell 110 includes a pair of blind bores 112 and 113. A first blind bore 112 is coupled with the first screw 141, and the second blind bore 113 is coupled with the second screw 142. A screw thread is formed in each of inner circumferential surfaces of the first and second blind bores 112 and 113 in order for the first and second screws 141 and 142 to be coupled therewith. On an inner surface, the cap plate 111 a comprises a protruding part P corresponding to each of the blind bores 112 and 113.

The protection circuit substrate 120 includes an insulating substrate 121, a printed circuit pattern (not shown), a conductive pad 123, a protection circuit unit 124, a charging/discharging terminal 125, and first and second tabs 131 and 132. The conductive pad 123, the protection circuit unit 124, and the charging/discharging terminal 125 are soldered to the printed circuit pattern formed on the insulating substrate 121. The protection circuit substrate 120 is electrically connected to the bare cell 110. That is, a negative electrode of the protection circuit substrate 120 is electrically connected to the electrode terminal 114, which is the negative electrode P- of the bare cell 110, by a lead tab 120a, and a positive electrode of the protection circuit substrate 120 is electrically connected to the sealing assembly 110, which is the positive electrode P+ of the bare cell 110, by the first tab 131. A positive temperature coefficient (PTC) device 120a1 is electrically connected between the negative electrode of the protection circuit substrate 120 and the electrode terminal 114 and serves to block the electrical connection between the negative electrode of the protection circuit substrate 120 and the electrode terminal 114 when the temperature thereof is excessively high or an excessive current flows therethrough. The protection circuit unit 124 may comprise a passive device such as a resistor, a capacitor, or the like, an active device such as a field-effect transistor, a safety device such as the PTC device 120a1, and integrated circuits. The protection circuit unit 124 charges or discharges the bare cell 110 when the bare cell 110 is to be charged/discharged, and blocks a charging/discharging path in the bare cell 110 when the bare cell 110 is overheated or is in an overcurrent state, thereby preventing the bare cell 110 from lifetime degradation, overheating, exploding, and the like.

The first and second tabs 131 and 132 are respectively formed on different ends of the protection circuit substrate 120 to electrically connect the protection circuit substrate 120 and the bare cell 110. First and second coupling holes 131 a and 132a are formed in the first and second tabs 131 and 132 corresponding to the blind bores 112 and 113, respectively. Referring to FIG. 1C, the first tab 131 and the second tab 132 are connected to the cap plate 111a of the bare cell 110. The first and second coupling holes 131 a and 132a respectively corresponding to the first and second blind bores 112 and 113 of the cap plate 111 a are formed in the first tab 131 and the second tab 132. The first tab 131 and the second tap 132 support the protection circuit substrate 120 so that the protection circuit substrate 120 is mounted on a surface of the bare cell 110, and electrically connect the positive electrode of the protection circuit module 120 and the positive electrode of the bare cell 110.

Both the first and second tabs 131 and 132 may be formed of Ni or an alloy containing Ni, and may be soldered to the protection circuit substrate 120. In this case, in FIG. 1A, the protection circuit substrate 120 is connected to two tabs, that is, the first and second tabs 131 and 132, but the number of tabs is not limited to two. For example, the protection circuit substrate 120 may include only the first tab 131.

The first and second screws 141 and 142 include body parts 141 a and 142a and head parts 141 b and 142b. The body parts 141 a and 142a of the first and second screws 141 and 142 include a screw thread that is screw-coupled to the bore 112 and 113 of the bare cell 110. The head parts 141 b and 142b of the first and second screws 141 and 142 are formed in an upper part of the body parts 141a and 142a, and have a diameter greater than those of the body parts 141a and 142a. In FIG. 1A, grooves marked with + are formed in the head parts 141 b and 142b of the first and second screws 141 and 142 to facilitate rotation. The shape of the grooves is not limited thereto. In the present invention, one of ordinary skill in the art may embody the groove having various shapes. In addition to the mark +, the grooves may be marked with '― or *. A screw driver is inserted into the grooves so that the first and second screws 141 and 142 may be screw-coupled to the bare cell 110. The first and second screws 141 and 142 are coupled to the first and second bores 112 and 113b formed on different sides of the bare cell 110, so that the protection circuit substrate 120 may not be twisted and so that the coupling between the first and second tabs 131 and 132 and the protection circuit substrate 120 by soldering is enhanced, thereby preventing an increase in contact resistance. Also, the first and second screws 141 and 142 include a conductive material, so that the protection circuit substrate 120 and the bare cell 110 may be electrically connected to each other via the first and second tabs 131 and 132.

An internal thread may be formed in an inner circumferential surface of the bore 112 to be coupled with the first screw 141. Alternatively, the inner circumferential surface of the bore 112 may be formed to be smaller than an outside diameter of the first screw 141 and without an internal thread. In such a case the first screw 141 serves as a self-tapping screw by cutting a thread into the inner surface of the bore 112 as it is driven into the bore. For example, the inner diameter of the bore 112 of the cap plate 111 a may be greater than an inner diameter of the body part 141a and less than an outside diameter of the body part 141 a. Therefore, when the bore 112 is coupled to the first screw 141, the inner circumferential surface of the screw receiving groove 112 is deformed to be tightly adhered to the body part 141a of the first screw 141. The cap plate 111 a may include a light alloy, such as aluminum, so as to be easily deformed by the screw thread 141a1 of the first screw 141.

The second screw 142 and the second blind bore 113 may be similarly configured.

The cover case 150 includes first and second holes 151a and 152a. Mounting grooves 151 b and 152b are formed outside of the first and second holes 151 a and 152a. The mounting grooves 151 b and 152b are formed to have inner diameters greater than those of the first and second holes 151a and 152a so as to support head parts 141 b and 142b of the first and second screws 141 and 142. Hereinafter, the mounting grooves 151 b and 152b will be referred to as a first mounting groove 151 b and a second mounting groove 152b, respectively. The first screw 141 is coupled to the first bore 112 formed in the bare cell 110 after passing through the first hole 151 a formed in the cover case 150 and the first coupling hole 131a formed in the first tab 131. The head part 141 b of the first screw 141 is tightly adhered to the first mounting groove 151 b of the cover case 150. The second screw 142 is coupled in a similar manner. Therefore, the first screw 141 and the second screw 142 couple the cover case 150 to the bare cell 110. The cover case 150 is a plastic case made by molding a resin material such as polycarbonate, and protects the protection circuit substrate 120 from an external impact and prevents a short circuit in the protection circuit substrate 120.

Referring to FIG. 1C, a rib 161 is formed inside the cover case 150, and the rib 161 supports an upper surface of the protection circuit substrate 120 to tightly adhere the protection circuit substrate 120 to the bare cell 110, which prevents the protection circuit substrate 120 from moving, and the contact resistance between the first and second tabs 131 and 132 soldered to the protection circuit substrate 120 and the bare cell 110 from increasing. When the cover case 150 is coupled with the first and second screws 141 and 142, the first and second tabs 131 and 132 are more tightly adhered to the bare cell 110, so as to prevent an increase in the contact resistance between the first and second taps 131 and 132 and the bare cell 110.

The contact resistance between the first and second tabs 131 and 132 and the bare cell 110 may be measured through a random free fall (RFF) test. The RFF test is performed by dropping six battery packs 100 at the same time from a height of 1 meter two hundred times and measuring contact resistance. In this case, the structure of the battery pack 100 may be controlled so that variation of the contact resistance obtained by the RFF test is less than a predetermined value. The variation of the contact resistance may be controlled to be less than 14 mΩ. Table 1 shows results of the RFF test performed on the battery pack 100.

**[Table 1]**

| No. | Initial Value (mΩ) | 50 times (mΩ) | 100 times (mΩ) | 150 times (mΩ) | 200 times (mΩ) | Result |
|---|---|---|---|---|---|---|
| 1 | 134.5 | 137.4 | 141.5 | 146.5 | 144.3 | good |
| 2 | 131.5 | 135.7 | 138.7 | 139.2 | 139.4 | good |
| 3 | 135.5 | 137.1 | 142.4 | 143.5 | 180.0 | poor |
| 4 | 131.7 | 139.2 | 156.0 | 147.1 | 146.7 | poor |
| 5 | 135.0 | 138.4 | 153.0 | 149.0 | 158.0 | poor |
| 6 | 134.2 | 145.6 | 183.0 | 156.0 | 156.5 | poor |

As shown in Table 1, contact resistances of four battery packs 100, from among the six battery packs 100, were poor. The sizes of the battery packs 100 used in the RFF test will be described with reference to Table 2. The sizes of the battery packs 100 used in Table 2 will be described with reference to FIG. 2. Here, W1 and W2, H1 and T1 denote widths, a height and a thickness of the bare cell 110, respectively. W3 and W4, H2 and T2 denote widths, a height and a thickness of the case 150, respectively.

**[Table 2]**

| Bare Cell 110 | | | | | Case 150 | | | |
|---|---|---|---|---|---|---|---|---|
| No. | W1 (mm) | W2(mm) | H1 (mm) | T1 (mm) | W3(mm) | W4(mm) | H2(mm) | T2(mm) |
| 1 | 43.81 | 40.40 | 41.86 | 5.16 | 44.11 | 40.38 | 4.68 | 5.75 |
| 2 | 43.79 | 40.40 | 41.85 | 5.17 | 44.10 | 40.39 | 4.69 | 5.76 |
| 3 | 43.79 | 40.39 | 41.84 | 5.16 | 44.09 | 40.39 | 4.67 | 5.76 |
| 4 | 43.79 | 40.40 | 41.85 | 5.17 | 44.10 | 40.40 | 4.69 | 5.76 |
| 5 | 43.80 | 40.40 | 41.83 | 5.16 | 44.10 | 40.39 | 4.71 | 5.76 |
| 6 | 43.81 | 40.40 | 41.85 | 5.17 | 44.10 | 40.38 | 4.68 | 5.75 |
| MIN | 43.79 | 40.39 | 41.83 | 5.16 | 44.09 | 40.38 | 4.67 | 5.75 |
| MAX | 43.81 | 40.40 | 41.86 | 5.17 | 44.11 | 40.40 | 4.71 | 5.76 |
| difference | 0.02 | 0.01 | 0.03 | 0.01 | 0.02 | 0.016 | 0.04 | 0.01 |

Here, the sizes of the bare cell 110 and the case 150 have values within a predetermined range, so that the bare cell 110 and the case 150 may be uniformly mounted on a jig of an engaging device. In this case, the weight of the battery pack 100 is about 26 g.

The state of coupling between the first tab 131 and the cap plate 111a before and after performing the RFF test will be described with reference to FIGS. 3A and 3B. FIG. 3A is an enlarged cross-sectional view of a part llla of FIG. 1C. FIG. 3B is a cross-sectional view illustrating a state where a RFF test has been performed on the embodiment of FIG. 3A. In FIG. 3A, the first tap 131 and the cap plate 111a are tightly adhered to each other by coupling between the first screw 141 and the cap plate 111 a. A gap g is generated between the first tab 131 and the cap plate 111a after the RFF test is performed, and thus contact resistance therebetween is increased. Surface precision of the first and second screws 141 and 142 influences the gap g. The surface precision of the first and second screws 141 and 142 may therefore be increased to improve coupling between them and the cap plate and to decrease the rate of contact resistance of the battery pack 100.

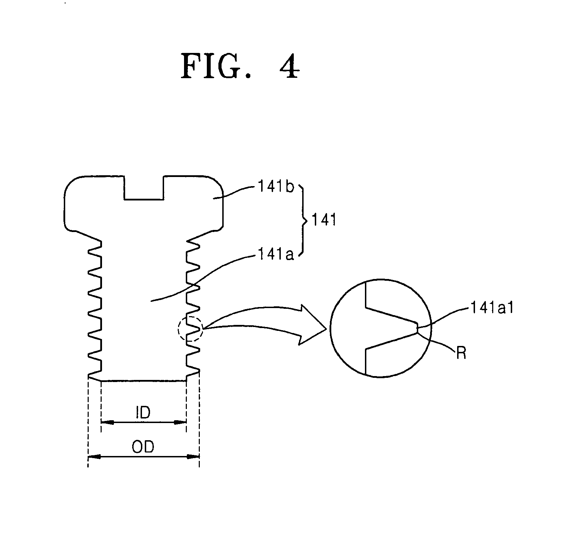

Table 3 shows values of outer diameters (OD) and inner diameters (ID) of an embodiment 4-1 and comparative examples 4-2 and 4-3. Referring to FIG. 4, the outer diameters OD and the inner diameters ID of the first and second screws 141 and 142 are outer diameters and inner diameters of the body parts 141 a of the first and second screws 141 and 142, respectively. That is, a circumscribed circle of a peak of the screw thread 141a1 of the body part 141a is the outer diameter OD, and an inscribed circle of a valley of the screw thread 141a1 is the inner diameter ID.

**[Table 3]**

| No. | Embodiment 4-1 | | Comparative Example 4-2 | | Comparative Example 4-3 | |
|---|---|---|---|---|---|---|
| | outer diameter 1 (mm) | inner diameter 1 (mm) | outer diameter 2 (mm) | inner diameter 2 (mm) | outer diameter 3 (mm) | inner diameter 3 (mm) |
| 1 | 1.212 | 0.875 | 1.217 | 0.869 | 1.211 | 0.869 |
| 2 | 1.216 | 0.867 | 1.215 | 0.858 | 1.213 | 0.873 |
| 3 | 1.209 | 0.872 | 1.212 | 0.877 | 1.219 | 0.873 |
| 4 | 1.205 | 0.872 | 1.216 | 0.862 | 1.210 | 0.868 |
| 5 | 1.210 | 0.870 | 1.217 | 0.874 | 1.200 | 0.874 |
| 6 | 1.205 | 0.871 | 1.215 | 0.876 | 1.206 | 0.880 |
| Max | 1.216 | 0.875 | 1.217 | 0.877 | 1.219 | 0.880 |
| Min | 1.205 | 0.867 | 1.212 | 0.858 | 1.200 | 0.868 |
| Ave | 1.210 | 0.871 | 1.215 | 0.869 | 1.210 | 0.873 |
| Range | 0.011 | 0.008 | 0.005 | 0.019 | 0.019 | 0.012 |
| Chemical Polishing | yes | | no | | no | |
| Plating Thickness (um) | 5.5 | | 2.5 | | 4.5 | |

Referring to Table 3, in the embodiment 4-1, a chemical polishing process is performed, and a plating thickness is 5.5 um. In the comparative example 4-2, a chemical polishing process is not performed, and a plating thickness is 2.5 um. In the comparative example 4-3, a chemical polishing process is not performed, and a plating thickness is 4.5 um. When the battery pack 100 is configured as an embodiment 4-1, the error rate of the battery pack 100 is 2,000 ppm (parts-per-million). On the other hand, when the battery pack is configured as in comparative examples 4-2 and 4-3, the error rate of the battery pack 100 is 20,000 ppm. The difference of the error rate shows that the surface states of the first and second screws 141 and 142 are changed according to whether or not the chemical polishing process has been performed, and thus the surface states of the first and second screws 141 and 142 affect the error rate of the battery pack 100.

In general, when small-sized first and second screws 141 and 142 are manufactured, a polishing process is not performed. However, according to the invention, a polishing process is added when the small-sized first and second screws 141 and 142 are manufactured, so as to control surface roughnesses of the first and second screws 141 and 142. In this case, the small-sized first and second screws 141 and 142 may be screws each having a length of less than 6 mm.

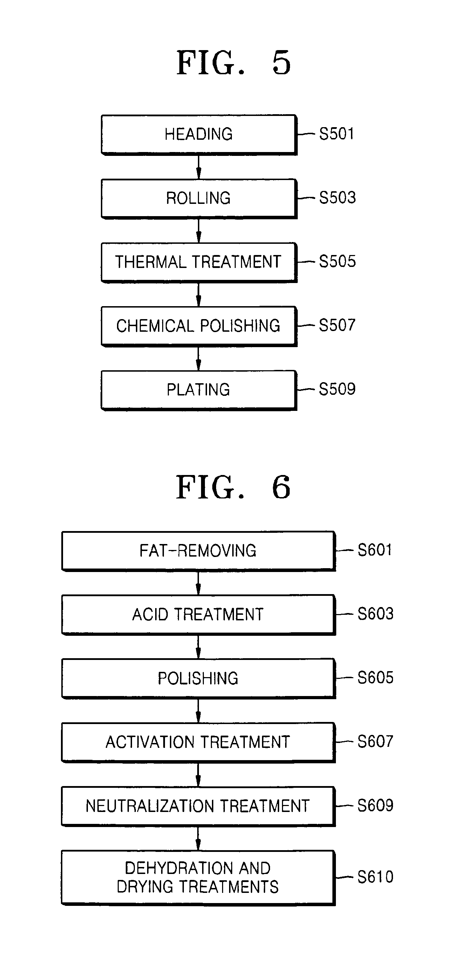

A method of manufacturing the small-sized first and second screws 141 and 142 will now be described with reference to FIG. 5.

First, a raw material for forming the first and second screws 141 and 142 is prepared. The raw material may be carbon steel such as SWCH18A. The head part 141 b is formed by processing the raw material (S501). A screw thread is formed by performing a rolling process (S503). A thermal treatment is performed on the first and second screws 141 and 142 through quenching (HV800) and tempering (HV 500∼520) processes (S505). Then, sizes of the first and second screws 141 and 142 are processed through a chemical polishing process (S507). Subsequently, a plating process is performed thereon in order to prevent metal oxidization (S509).

Table 4 shows values of outer diameters OD and inner diameters ID of the screw through the rolling (S503), chemical polishing process (S507) and plating process (S509).

**[Table 4]**

| No. | Outer Diameter OD of Screw | | | Inner Diameter ID of Screw | | |
|---|---|---|---|---|---|---|
| | rolling (mm) | chemical polishing (mm) | plating (mm) | rolling (mm) | chemical polishing (mm) | plating (mm) |
| 1 | 1.269 | 1.250 | 1.255 | 0.908 | 0.900 | 0.913 |
| 2 | 1.257 | 1.239 | 1.250 | 0.903 | 0.896 | 0.916 |
| 3 | 1.255 | 1.237 | 1.250 | 0.901 | 0.895 | 0.918 |

Referring to Table 4, the variation of the outer diameters OD of the first and second screws 141 and 142 is greatest during the chemical polishing process. This is because the area of a peak of the screw thread 141a1 is small compared to the inner diameters ID of the first and second screws 141 and 142, and thus the variation of the outer diameter OD decreasing due to the chemical polishing process (S507) is great. The variation of the inner diameters ID of the first and second screws 141 and 142 is greatest during the plating process. Since the surface of the body part 141 a is advantageous to deposition of plating during the plating process (S509), the variation of the inner diameter ID may be great during the plating process (S509). Referring to FIG. 4, a corner of the screw thread 141 a1 is rounded R in the chemical polishing process, and the surface roughnesses of the first and second screws 141 and 142 become uniform, and thus interference between the surfaces of the screws and the bare cell 110 is reduced, and the screws 141, 142 may be inserted with a relatively small torque. Also, the chemical polishing process reduces variation of the screws 141, 142 thereby reducing the error rate of the battery pack 100.

The chemical polishing process (S507) will now be described in detail with reference to FIG. 6. After the thermal treatment (S505) is performed, a de-greasing process is performed by controlling a composition ratio of caustic soda, surfactant and water to be 1:4:10 (S601). Then, an acid treatment is performed on the screws 141 and 142 by controlling a composition ratio of hydrochloric acid, scale remover and water to be 10:1:10 (S603). Then, a polishing solution is prepared, wherein a composition ratio of ammonium hydrogen-fluoride, hydrogen peroxide and water in the polishing solution is 1:2:10, and then a polishing process is performed on the screws 141 and 142 (S605). Then, hydrochloric acid and water are activated with a composition ratio of 1:2 (S607), and a neutralization treatment is performed on the screws 141 and 142 through surfactant and sodium tripolyphosphate (S609). Then, dehydration and drying treatments are performed on the screws 141 and 142 (S601), thereby completing the chemical polishing process (S507). The chemical polishing process of FIG. 6 is just an embodiment, and each material may have various composition ratios. The surface states of the first and second screws 141 and 142 may be changed according to a composition ratio of the ammonium hydrogen-fluoride, hydrogen peroxide and water in the polishing solution of the polishing process (S605), a working environment or a working condition. Also, if the surface roughnesses of the first and second screws 141 and 142 are not uniform, even though the plating process (S509) is performed on the first and second screws 141 and 142 afterwards, the surfaces become non-uniform. Accordingly, the chemical polishing process (S507) should be performed in consideration of major factors affecting the chemical polishing process (S507).

According to the chemical polishing process (S507) of the present invention, the major factors affecting the chemical polishing process (S507) may be controlled so as to process the sizes of the first and second screws 141 and 142 and to control the surface roughnesses thereof. That is, as shown in Table 4, the outer diameters and the inner diameters of the first and second screws 141 and 142 are changed through the chemical polishing process (S507), and the sizes of the first and second screws 141 and 142 may be processed in consideration of factors affecting the variation of the outer diameters and the inner diameters of the first and second screws 141 and 142. In this case, the factors affecting the chemical polishing process (S507) may be concentration and temperature of the polishing solution used in the chemical polishing process and time for the reaction between the polishing solution and the screws 141 and 142 (S507).

Table 5 shows a variation of the outer and inner diameters and the surface roughnesses of the first and second screws 141 and 142 according to the concentration of the polishing solution in the chemical polishing process (S507).

**[Table 5]**

| No. | Processing Condition | | | Result of Chemical Polishing | | N Note |
|---|---|---|---|---|---|---|
| | concentration (hydrometer) | temperature (°C) | time (s) | polishing solution (OD) (mm) | inner diameter ID (mm) | |
| 1 | 1 | 40 | 10 | 1.242 | 0.898 | low gloss |
| 2 | 3 | | | 1.241 | 0.899 | low gloss |
| 3 | 5 | | | 1.234 | 0.895 | good |
| 4 | 7 | | | 1.227 | 0.893 | good |
| 5 | 9 | | | 1.233 | 0.894 | good |
| 6 | 11 | | | 1.186 | 0.874 | dimensional error |

When the concentration of the polishing solution is 5 through 9, the sizes and surface roughnesses of the first and second screws 141 and 142 are good. The concentration may be measured through a Baume's hydrometer. A weight of a material at a predetermined temperature is a unique value of the material. Accordingly, purity of the polishing solution may be checked by measuring the weight. That is, the concentration may be determined by using a relationship between the weight and concentration of the polishing solution.

Referring table 6, the concentration of the polishing solution may vary according to a composition ratio of ammonium hydrogen-fluoride, hydrogen peroxide and water.

**Table 6**

| | | | | | | |
|---|---|---|---|---|---|---|
| Ammonium hydrogen-fluoride (ml) | 100 | 100 | 100 | 100 | 100 | 100 |
| hydrogen peroxide (ml) | 50 | 100 | 200 | 250 | 300 | 350 |
| Water (ml) | 1000 | 1000 | 1000 | 1000 | 1000 | 1000 |
| Concentration of a Baum's hydrometer | 1 | 3 | 5 | 7 | 9 | 11 |

Table 7 shows a variation and surface roughnesses of the outer and inner diameters of the first and second screws 141 and 142 according to a temperature of the polishing solution.

**[Table 7]**

| No. | Processing Condition | | | Result of Chemical Polishing | | Note |
|---|---|---|---|---|---|---|
| | concentration (hydrometer) | temperature (ºC) | time (s) | outer diameter OD (mm) | inner diameter ID (mm) | |
| 1 | 9 | 10 | 10 | 1.246 | 0.897 | rough |
| 2 | | 20 | | 1.239 | 0.896 | low gloss |
| 3 | | 30 | | 1.235 | 0.894 | good |
| 4 | | 40 | | 1.233 | 0.894 | good |
| 5 | | 50 | | 1.228 | 0.889 | good |
| 6 | | 70 | | 1.222 | 0.889 | lowest limit of size |

When a temperature of the polishing solution is 30°C through 50°C, the first and second screws 141 and 142 had preferable sizes and surface roughnesses. That is, the sizes and surface roughnesses of the first and second screws 141 and 142 may be controlled by controlling the temperature of the polishing solution during the chemical polishing process (S507).

Table 8 shows a variation of outer and inner diameters and surface roughnesses of the first and second screws 141 and 142 according to time.

**[Table 8]**

| No. | Processing Condition | | | Result of Chemical Polishing | | Note |
|---|---|---|---|---|---|---|
| | concentration (hydrometer) | temperature (°C) | time (s) | outer diameter OD (mm) | inner diameter ID (mm) | |
| 1 | 9 | 40 | 5 | 1.244 | 0.896 | inner diameter is rough good |
| 2 | | | 10 | 1.233 | 0.894 | |
| 3 | | | 15 | 1.226 | 0.890 | good |
| 4 | | | 20 | 1.209 | 0.886 | lowest limit of size |
| 5 | | | 30 | 1.183 | 0.876 | poor size |
| 6 | | | 40 | 1.159 | 0.868 | poor size |

Referring to Table 8, when time is 10 s through 15 s, the first and second screws 141 and 142 had preferable sizes and surface roughnesses.

Accordingly, referring to Tables 5 through 8, when the concentration is 5 through 9, when the temperature of the polishing solution is 30°C through 50°C, and when the time for the reaction between the polishing solution and_the screws 141 and 142 is 10 s through 15 s, the first and second screws 141 and 142 had preferable sizes and surface roughnesses. Also, values of the sizes and surface roughnesses of the first and second screws 141 and 142 may be obtained by satisfying the concentration and temperature of the polishing solution and time for the reaction between the polishing solution and the screws 141 and 142.

Now, a condition, in which the concentration is 5 through 9, the temperature is 30°C through 50°C, and the time for the reaction between the polishing solution and the screws 141 and 142 is 10 s through 15 s, is defined as a first condition. For example, the outer diameters OD of the first and second screws 141 and 142 having undergone the chemical polishing process (S507) according to the first condition may be 1.22 mm through 1.27 mm, and the inner diameter ID thereof may be 0.88 mm through 0.93 mm. In more detail, the outer diameter OD may be 1.226 mm through 1.235 mm, and the inner diameter ID may be 0.889 mm through 0.895 mm. However, the present invention is not limited thereto. Thus, since the concentration and temperature of the polishing solution and time for the reaction between the polishing solution and the screws 141 and 142 may affect the sizes and surface roughnesses of the first and second screws 141 and 142, the first and second screws 141 and 142 may be manufactured by controlling the concentration and temperature of the polishing solution and time for the reaction between the polishing solution .and_the screws 141 and 142.

Coupling and a coupling error rate of the first and second screws 141 and 142 coupled with a light alloy metal are significantly different according to surface precision of the first and second screws 141 and 142. That is, minute burs, external substances, etc. generated during the manufacturing process of the first and second screws 141 and 142 undergo the chemical polishing process (S507), and thus the shape of the screw threads 141a1 of the first and second screws 141 and 142 are rounded and the surfaces of the screw threads 141a1 are smoothened. Accordingly, frictional resistance generated when the first and second screws 141 and 142 are coupled with the light alloy metal and damage applied to the light alloy metal are minimized, thereby improving coupling of the first and second screws 141 and 142. For example, the first and second screws 141 and 142 having undergone the chemical polishing process (S507) according to the first condition may have clamping force of about 180 N when being coupled with the first and second bores 112 and 113.

Table 9 shows a result of the RFF test performed on the battery pack 100 using the first and second screws 141 and 142 whose sizes are processed through the chemical polishing process (S507), under the first condition.

**[Table 9]**

| No. | Initial (mΩ) | 50 times (mΩ) | 100 times (mΩ) | 150 times (mΩ) | 200 times (mΩ) | Note |
|---|---|---|---|---|---|---|
| 1 | 132.3 | 132.4 | 131.5 | 136.5 | 134.1 | good |
| 2 | 130.1 | 131.7 | 138.5 | 139.7 | 139.3 | good |
| 3 | 130.3 | 133.1 | 132.3 | 133.2 | 135.1 | good |
| 4 | 130.2 | 132.2 | 136.6 | 137.1 | 136.2 | good |
| 5 | 131.2 | 134.4 | 133.2 | 135.1 | 138.2 | good |
| 6 | 131.5 | 132.6 | 133.3 | 136.8 | 136.5 | good |

Compared to the result of Table 1, the results of Table 9 are significantly improved.

Also, the battery pack 100 has a coupling error rate of less than about 1,000 ppm during a coupling process, and thus process stability has been improved.

Although the above processes make use of chemical polishing, mechanical polishing and buffing techniques are also applicable to the invention.

A suitable mechanical polishing operation may be single stage process or a multi stage process. In a multi stage process, a succession of progressively finer abrasives would normally be used. As is conventional, polishing lubricants may be used to assist the polishing process.

It should be understood that the embodiments described herein should be considered in a descriptive sense only and not for purposes of limitation. Descriptions of features or aspects within each embodiment should typically be considered as available for other similar features or aspects in other embodiments.

## Claims

1. A battery assembly comprising:
a bare cell;
a protection circuit substrate, upon which protection circuit components are mounted;
at least one connection tab, connecting the protection circuit substrate to the bare cell; and
a case, in which the protection circuit substrate is housed;
wherein the connection tab is connected to the bare cell via a screw and
the screw has been polished.

2. A battery assembly according to Claim 1, wherein the screw has been chemically polished.

3. A battery assembly according to any preceding claim, wherein the screw extends through an opening in the connection tab.

4. A battery assembly according to any preceding claim, wherein the screw extends into a bore provided in the bare cell.

5. A battery assembly according to Claim 4 wherein the bore is a blind bore and there is a gap between an end of the bore and a tip portion of the screw.

6. A battery assembly according to any preceding claim, wherein the screw also connects the case to the bare cell and the case comprises an opening through which the screw extends towards the bare cell.

7. A battery assembly according to any preceding claim, wherein the screw is a self-tapping screw.

8. A battery assembly according to any preceding claim, comprising two connection tabs and two screws, each said screw connecting a respective one of the said connecting tabs to the bare cell.

9. A method of manufacturing a screw for connecting a connection tab to a bare cell in a battery assembly, the said method comprising:
forming a screw head;
forming a thread portion; and
subjecting the screw to a polishing process;
wherein the size of the screw is controlled by the polishing process.

10. A method according to Claim 9, wherein the polishing process is a chemical polishing process involving the application of a polishing solution.

11. A method according to Claim 9 or 10, wherein the chemical polishing process comprises:
a de-greasing step
an acid treatment;
application of the polishing solution;
an acid and water activation treatment;
a neutralisation treatment;
a dehydration treatment; and
a drying step.

12. A method according to Claim 12, wherein the concentration of the polishing solution is from 5 to 9 when measured using a Baume's hydrometer: the polishing solution has a temperature of from 30 to 50 °C; and/or the polishing solution is applied for a period of from 10 to 15 seconds.

13. A method according to one of Claims 8 to 12, wherein the length of the screw is controlled to be 6mm or less.

14. A method according to one of Claims 8 to 13, wherein the outer diameter of the thread is controlled to be from 1.22mm to 1.27mm and/or the inner diameter of the thread is controlled to be from 0.88mm to 0.93mm.

15. A method according to one of Claims 8 to 14, wherein at least one dimension of the screw is controlled to provide a predetermined resistance to separation between a tab and a bare cell of a battery assembly.
